# EUROPEAN PATENT APPLICATION

(11) **EP 3 018 591 A1**
(43) Date of publication of application: **11.05.2016**
(21) Application number: 14191783.1
(22) Date of filing: 05.11.2014
(51) Int. Cl.: G06F 17/30, H04N 21/236, H04N 21/4722, H04N 21/4725, H04N 21/478, H04N 21/858

(54) **System and method for products ordering via a television signal receiver**

(71) Applicant: Advanced Digital Broadcast S.A., 1292 Geneva (CH)
(72) Inventor: Filipiak, Wieslaw, 65-119 Zielona Gora (PL)
(74) Representative: Blonski, Pawel

(57) **Abstract**

Method for products ordering via a television signal receiver, the method comprising the steps of: receiving and playing back of video content data; pausing playback of the video content; the method further comprising the steps of: checking whether a dedicated application for products ordering is available to launch; launching said application; extracting, from the video content data, metadata describing products present in the video content data; displaying information related to at least one product, based on the extracted metadata; receiving user's selection of at least one product; finalizing a transaction regarding the at least one selected product.

## Description

The present invention relates to a system and method for products ordering via a television signal receiver. In particular the present invention relates to improvements in product placement systems, content presentation and content ordering.

Product placement, or embedded marketing, is any form of audiovisual commercial communication consisting of the inclusion of or reference to a product, a service so that it is featured within a programme. Product placement stands out as a marketing strategy because it is the most direct attempt to derive commercial benefit from the context and environment within which the product is displayed or used" (source: Wikipedia).

Prior art publication of US 8312486 B1 entitled "Interactive product placement system and method therefor" discloses a web-based rich media software application allowing non-technical end-users the ability to easily create full frame interactive media overlays into the video production which has been encoded with pre-defined cue points that request immersive full motion video interactive overlay elements from an ad-server.

The drawback of this solution is a very complex, overlay approach to product placement, which requires special editing software as well as trained editors staff in order to create product placement arrangements.

It would be advantageous to improve the known embedded marketing systems by providing special configuration options and related product purchasing options for consumers.

The aim of the development of the present invention is an improved system and method for products ordering via a television signal receiver.

### SUMMARY OF THE INVENTION

An object of the present invention is a method for products ordering via a television signal receiver, the method comprising the steps of: receiving and playing back of video content data; pausing playback of the video content; the method further comprising the steps of: checking whether a dedicated application for products ordering is available to launch; launching said application; extracting, from the video content data, metadata describing products present in the video content data; displaying information related to at least one product, based on the extracted metadata; receiving user's selection of at least one product; finalizing a transaction regarding the at least one selected product.

Another object of the present invention is a computer program comprising program code means for performing all the steps of the computer-implemented method according to the present invention when said program is run on a computer.

Another object of the present invention is a computer readable medium storing computer-executable instructions performing all the steps of the computer-implemented method according to the present invention when executed on a computer.

These and other objects of the invention presented herein are accomplished by providing a system and method for products ordering via a television signal receiver. Further details and features of the present invention, its nature and various advantages will become more apparent from the following detailed description of the preferred embodiments shown in a drawing, in which:
Fig. 1 presents a general diagram of the system according to the present invention;
Fig. 2 presents a diagram of the sellers' module;
Fig. 3 presents a diagram of the content provider's module;
Fig. 4 presents examples of user devices;
Fig. 5A presents an aspect of the present invention wherein a video material is paused;
Fig. 5B and Fig. 5C show a selection of a product;
Fig. 5D-E depict offers overlay for a selected product;
Fig. 6 presents products description data; and
Fig. 7 presents the method according to the present invention.

### NOTATION AND NOMENCLATURE

Some portions of the detailed description which follows are presented in terms of data processing procedures, steps or other symbolic representations of operations on data bits that can be performed on computer memory. Therefore, a computer executes such logical steps thus requiring physical manipulations of physical quantities.

Usually these quantities take the form of electrical or magnetic signals capable of being stored, transferred, combined, compared, and otherwise manipulated in a computer system. For reasons of common usage, these signals are referred to as bits, packets, messages, values, elements, symbols, characters, terms, numbers, or the like.

Additionally, all of these and similar terms are to be associated with the appropriate physical quantities and are merely convenient labels applied to these quantities. Terms such as "processing" or "creating" or "transferring" or "executing" or "determining" or "detecting" or "obtaining" or "selecting" or "calculating" or "generating" or the like, refer to the action and processes of a computer system that manipulates and transforms data represented as physical (electronic) quantities within the computer's registers and memories into other data similarly represented as physical quantities within the memories or registers or other such information storage.

A computer-readable (storage) medium, such as referred to herein, typically may be non-transitory and/or comprise a non-transitory device. In this context, a non-transitory storage medium may include a device that may be tangible, meaning that the device has a concrete physical form, although the device may change its physical state. Thus, for example, non-transitory refers to a device remaining tangible despite a change in state.

### DESCRIPTION OF EMBODIMENTS

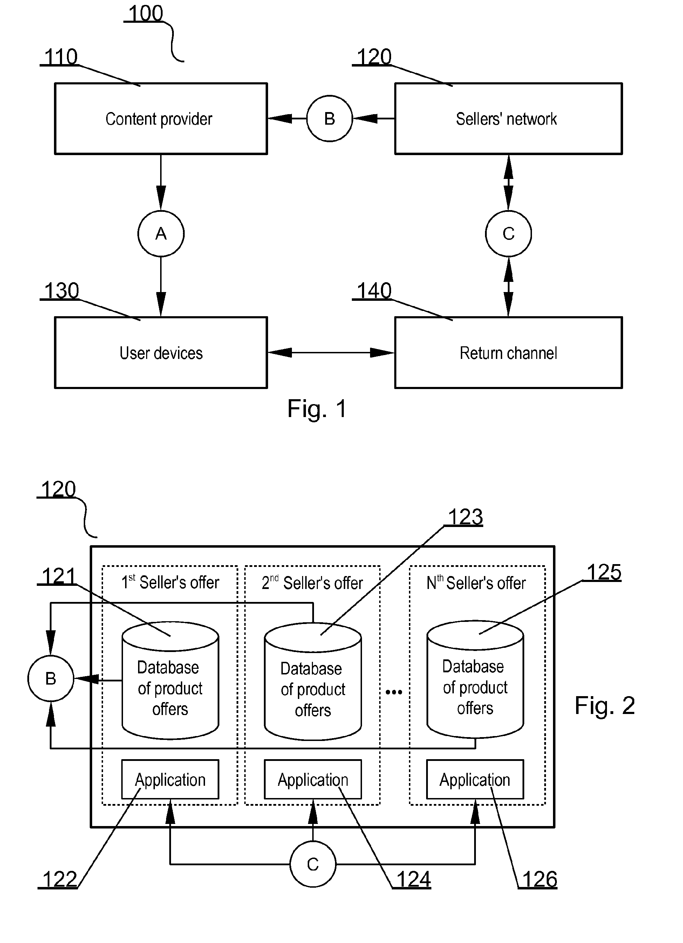

Fig. 1 presents a general diagram of the system according to the present invention. The system comprises a sellers' module 120 that provides data for a content provider 110. In turn the content provider 110 generates television data streams for user devices 130. The user devices may be any electronic devices comprising a display (or a suitable external display interface) and being able to process and present television content on such display. The user devices 130 may communicate with a sellers' module 120 via a return channel 140 that may be a cable connection, Ethernet connection, SMS communication or any other suitable communication channel capable of facilitating long distance data exchange.

Fig. 2 presents a diagram of the sellers' module 120. Each seller 120 provides a description of products in a form of a database 121, 123, 125. The database comprises for example products descriptions, links (e.g. URL) to further information regarding the products and data regarding purchasing method. The database may further comprise a picture of the product.

The purchasing method definition may be a special code to be sent to a given telephone number via an SMS or it may be a reference to (e.g. a command for) a special application 122, 124, 126 that manages purchasing transaction for each seller. The purchasing method may also include downloading and executing a dedicated software application.

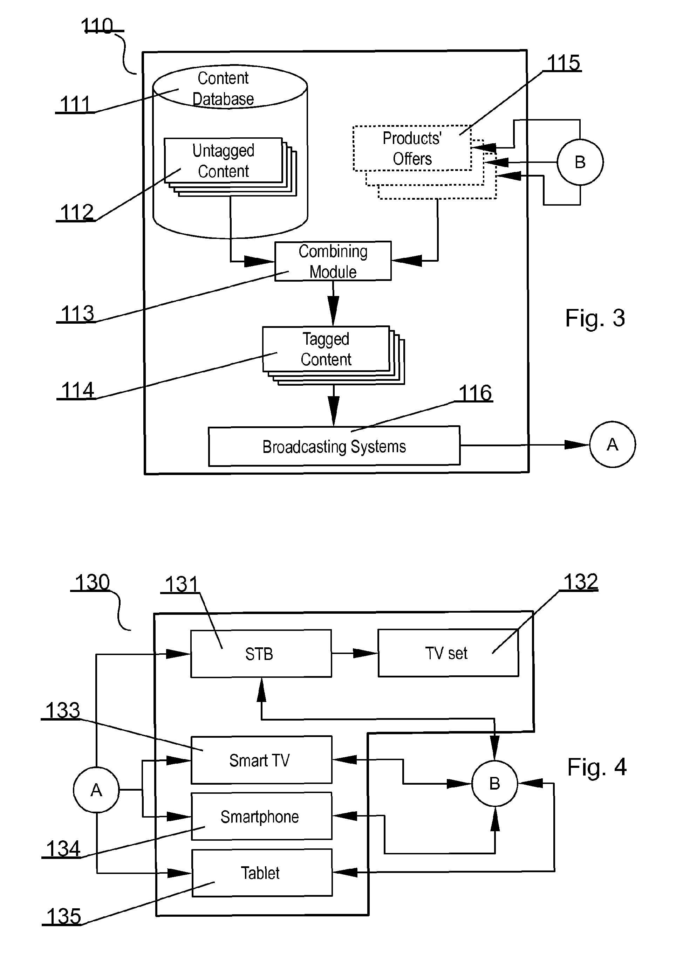

Fig. 3 presents a diagram of the content provider's module, which comprises a content database 111 comprising source content 112, which is to me merged with product offers 115 received from the sellers' module 120. The data regarding product offers may be embedded as private data in for example MPEG data stream or in a similar manner. This step is executed by a combining module 113, which outputs a data stream 114 that may be referred to as a tagged content due to the fact that it comprises tags describing products present in selected video frames. Such content 114 is subsequently transmitted to subscribers, preferably via a cable, satellite or terrestrial broadcast or the like.

Fig. 4 presents examples of user devices 130. Smart TV 133, smartphone 134 or a tablet 135 have integrated displays for content presentation while other television data receivers such as set-top boxes 131 output a signal to a suitable external display 132.

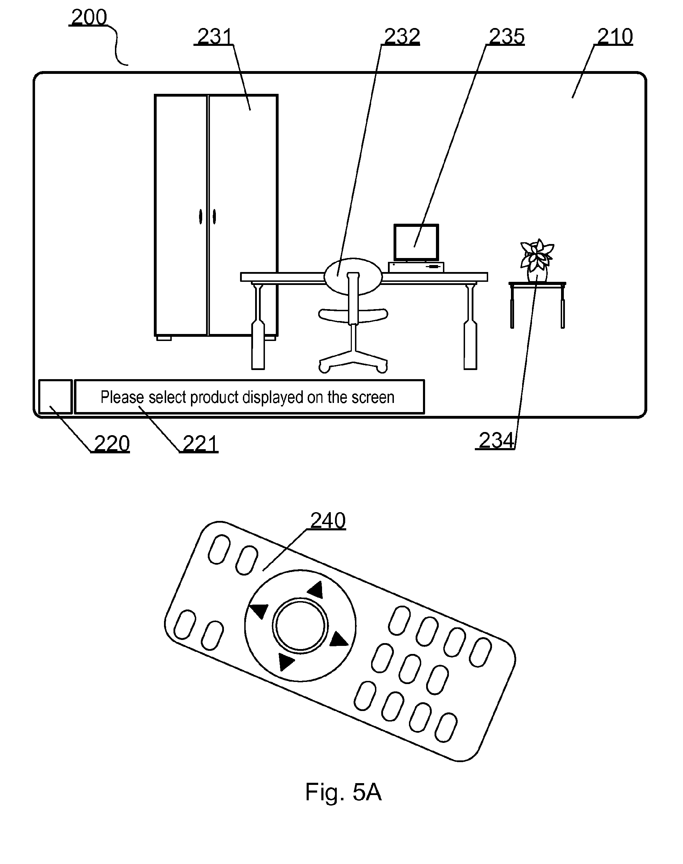

Fig. 5A presents an aspect of the present invention wherein a video material is paused and an indication 220 may be shown that a dedicated application may be executed in order to provide shopping experience for a user. The application may be downloadable from the video data stream or be resident on the video data receiver.

When a user starts the application, and information overlay 221 may be shown while products identified on this particular video frame 210 are marked so that the user is aware which products 231, 232, 234, 235 are available for purchase.

The products for selection are appropriately described in the video data stream as will be described in details in the reminder of this specification.

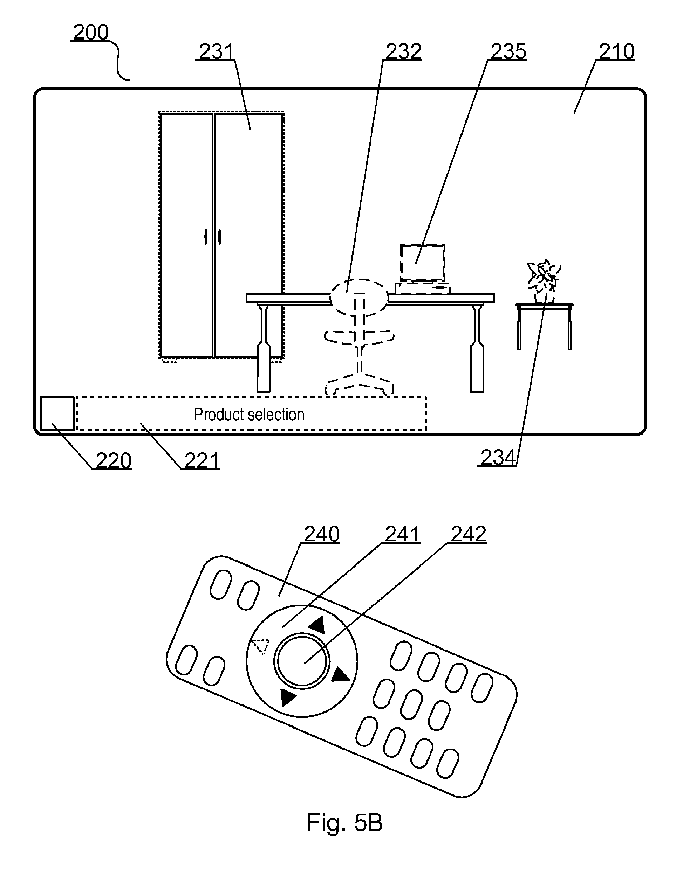

Fig. 5B shows a selection of a product with a remote control unit 240. For this purpose a navigational button 241 (in particular up-direction) and accept button 242 may be used. In this example, product 231 is selected while products 232, 234, 235 are available for selection.

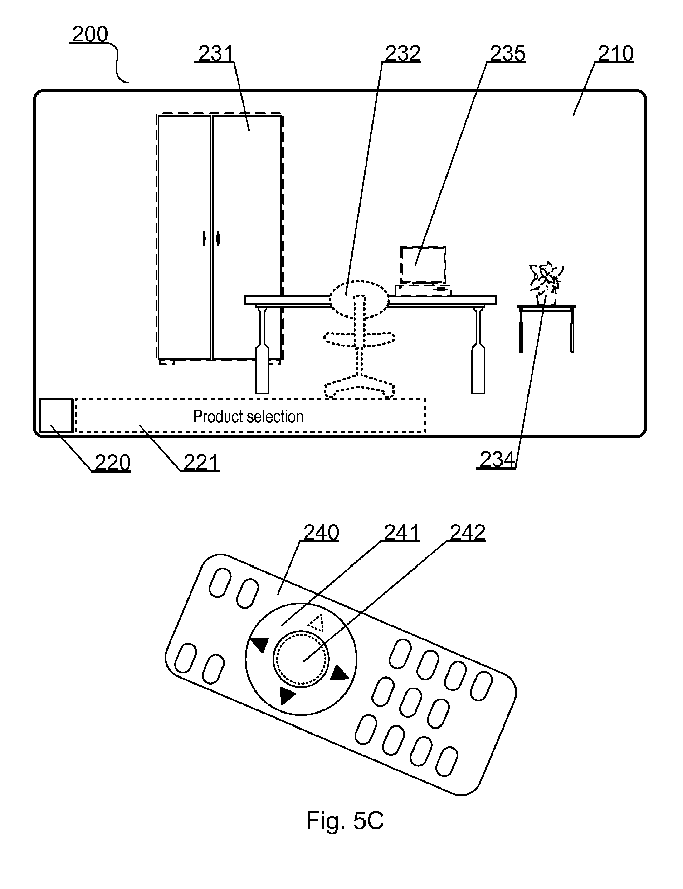

Similarly, Fig. 5C shows a selection of a product with a remote control unit 240. For this purpose the navigational button 241 (in particular right-direction) and the accept button 242 may be used. In this example, products 232 is selected while products 231, 234, 235 are available for selection.

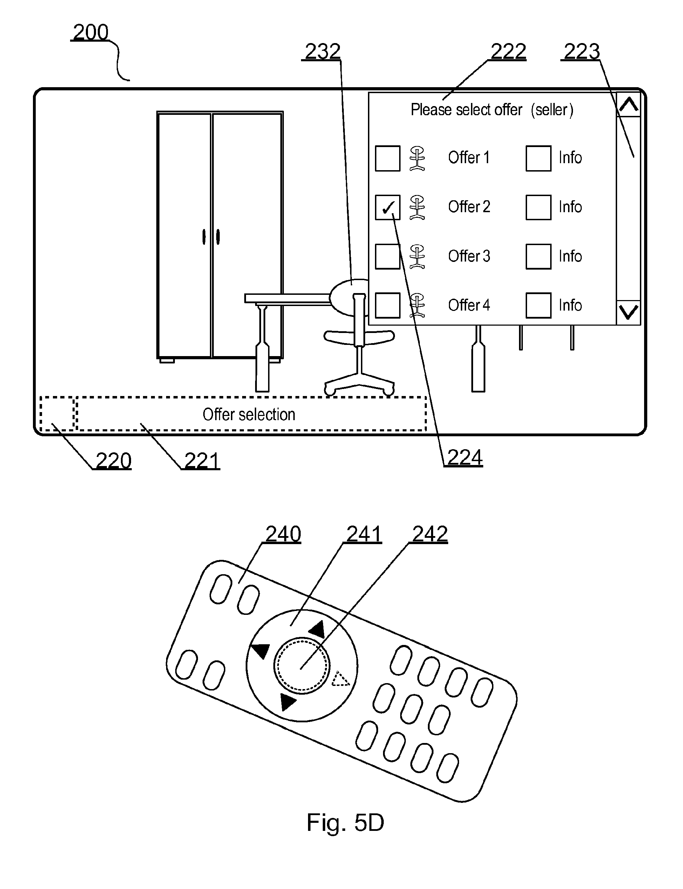

Fig. 5D depicts offers overlay for a selected product. Once a user has selected a product in the video frame an overlay 222 may be presented in order to present offers for the same product or service by different providers. It may be the case that more than one provider (seller) offers a given product. As a final step, a user may select one of the presented offers 224 by appropriately using the remote control unit 240.

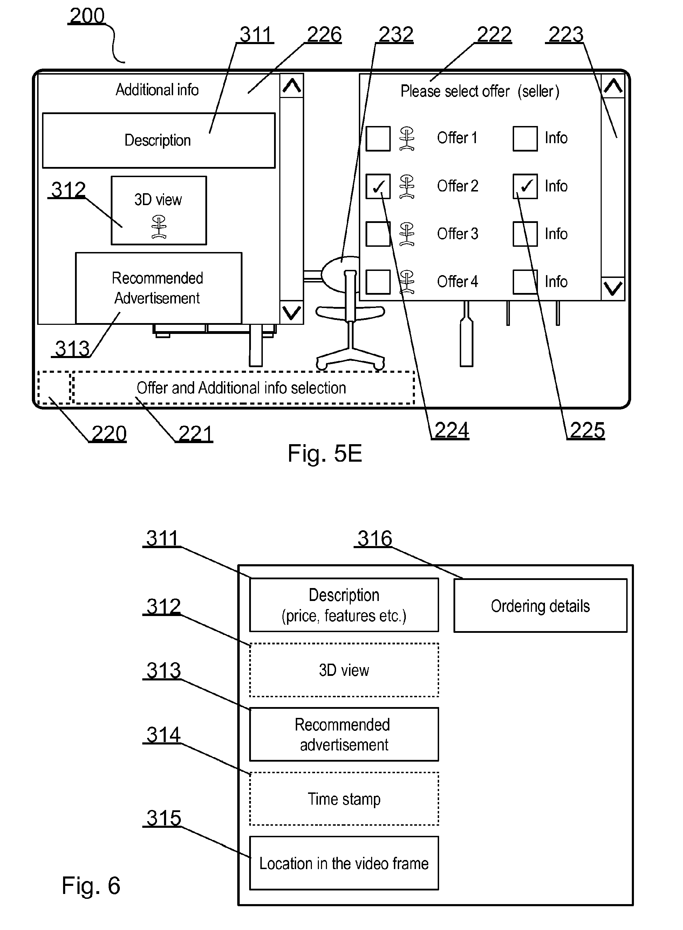

In case the user selects an info option 225, as shown in Fig. 5E, and additional, detailed overlay may be presented that shows details of an offer/product. The details of a product may comprise a description 311, a reference image 312, an advertisement 313.

The products for selection are appropriately described in the video data stream as shown in Fig. 6. This additional information may for example be preset in MPEG private sections or equivalent data packets as present in other video encoding standards. These description data are based on information provided by the sellers and may comprise information on features, price etc. 311, optional image 312, a reference to an advertisement 313, a time stamp 314 in case products database is provided as a global one (possibly detached from the transmission of the video). In case the products database is present for each video frame or each intra-coded video frame, the time stamp field 314 may be omitted.

Further, product or service description data may comprise identification of its coordinates 315 in the video frame image. The coordinates may define a center of the product or service or define an outline (of said product or service) with a set of points on the image. Such an outline may then be presented as an overlay on the video frame, as shown in Fig. 5A, in order to ease presentation and selection of a product.

Finally, as previously explained, the product or service description data may comprise identification of an ordering method 316.

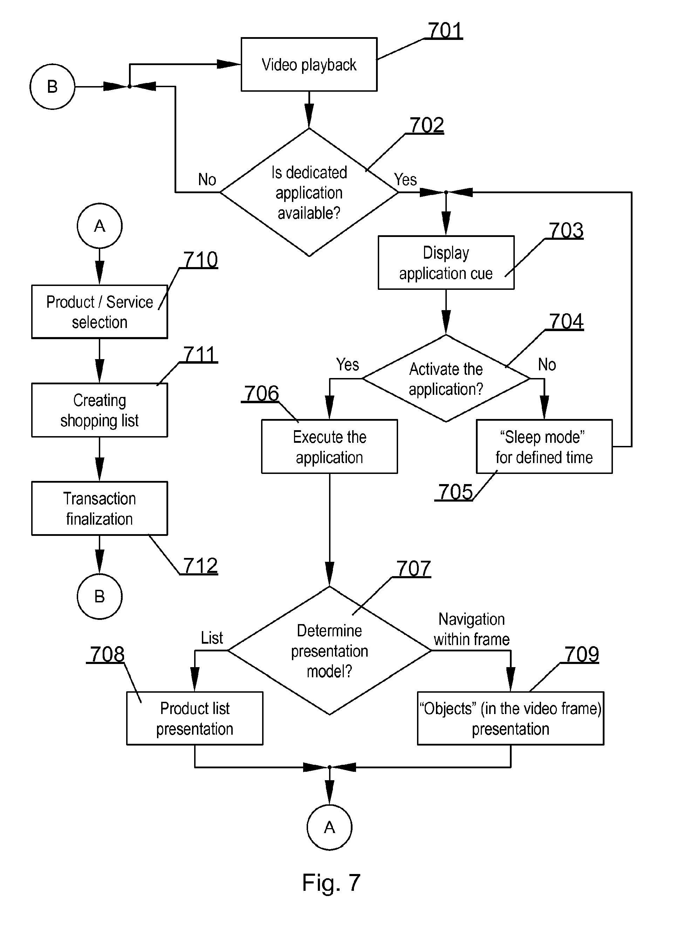

Fig. 7 presents the method according to the present invention. The procedure starts at step 701 from reception and playback of video content, preferably an encoded audio/video data stream such as MPEG data stream. Preferably, the system awaits until a user pauses the playback of the video content, so that a particular still frame is identifier and presented on a display screen.

Subsequently, at step 702, it is checked whether a dedicated application is available to launch. Such application may be local or downloadable. If such an application is not available, the system may await a playback command and return to playback of the video. Otherwise, when an application is available, at step 703 the application may signaled using a visual cue on the selected video frame.

Next, after a user's approval 705, the application may be launched at step 706. The application may determine presentation model 707 depending on presence of products coordinates data 315. In case coordinates data is not available a presentation in a form of a list 708 may be applied whereas in case coordinates data is available a presentation in a form of a navigation 709 among products locations in a presented image may be applied as shown with reference to Fig. 5A-E where products are visually marked using outlines.

The product information for this particular video frame is presented according to information present in the metadata as presented with reference to Fig. 6.

Subsequently, at step 710, there is awaited user's selection of a product or service so that a shopping cart list may be finalized at step 711. Finally, at step 712, a purchase transaction of the selected products may be finalized.

The present invention is related to a useful result of easy product ordering via a television signal receiver. This result is measurable and is hence concrete and tangible. Therefore, the invention as described herein provides a useful, concrete and tangible result.

Further, the invention is applied in particular devices such as an improved digital television subscriber terminal meaning that the idea underlying the invention is not abstract and is applied in particular improved machines. Thus the machine or transformation test is fulfilled.

It can be easily recognized, by one skilled in the art, that the aforementioned method for products ordering via a television signal receiver, may be performed and/or controlled by one or more computer programs. Such computer programs are typically executed by utilizing the computing resources in a computing device. Applications are stored on a non-transitory medium. An example of a non-transitory medium is a non-volatile memory, for example a flash memory while an example of a volatile memory is RAM. The computer instructions are executed by a processor. These memories are exemplary recording media for storing computer programs comprising computer-executable instructions performing all the steps of the computer-implemented method according the technical concept presented herein.

While the invention presented herein has been depicted, described, and has been defined with reference to particular preferred embodiments, such references and examples of implementation in the foregoing specification do not imply any limitation on the invention. It will, however, be evident that various modifications and changes may be made thereto without departing from the broader scope of the technical concept. The presented preferred embodiments are exemplary only, and are not exhaustive of the scope of the technical concept presented herein.

Accordingly, the scope of protection is not limited to the preferred embodiments described in the specification, but is only limited by the claims that follow.

## Claims

1. Method for products ordering via a television signal receiver, the method comprising the steps of:
• receiving and playing back of video content data (701);
• pausing playback of the video content;
the method being **characterized in that** it further comprises the steps of:
• checking whether a dedicated application for products ordering is available to launch (702);
• launching said application (706);
• extracting, from the video content data, metadata describing products present in the video content data;
• displaying information related to at least one product, based on the extracted metadata;
• receiving user's selection of at least one product (710);
• finalizing a transaction regarding the at least one selected product (712).

2. The method according to claim 1 **characterized in that** said metadata comprise products coordinates data (315) within a video frame.

3. The method according to claim 1 **characterized in that** said products coordinates data (315) define a center of the product or service or define an outline of said product or service with a set of points on the image.

4. The method according to claim 1 **characterized in that** said metadata is associated with each video frame or each intra-coded video frame.

5. The method according to claim 3 **characterized in that** the step of displaying information related to at least one product includes visually marking an outline of said product or service on the video data frame displayed during said paused playback.

6. The method according to claim 5 **characterized in that** the method further comprises a step of allowing navigation among the outlined products or services visually marked on the video data frame displayed during said paused playback.

7. A computer program comprising program code means for performing all the steps of the computer-implemented method according to claim 1 when said program is run on a computer.

8. A computer readable medium storing computer-executable instructions performing all the steps of the computer-implemented method according to claim 1 when executed on a computer.
